# DEMANDE DE BREVET EUROPEEN

(11) **EP 3 015 759 A2**
(43) Date de publication de la demande: **04.05.2016**
(21) Numéro de dépôt: 15189574.5
(22) Date de dépôt: 13.10.2015
(51) Int. Cl.: F21S 8/10, B60Q 1/26, B60Q 1/34, B60Q 1/28, F21V 8/00, F21Y 113/00

(54) **MODULE LUMINEUX POUR VÉHICULE AUTOMOBILE COMPRENANT UN GUIDE DE LUMIÈRE**

(30) Priorité: 03.11.2014 FR 1460544
(71) Demandeur: VALEO VISION, 93012 Bobigny Cedex (FR)
(72) Inventeur: SOENEN, Xavier, 49100 ANGERS (FR); GIRAUD, Sylvain, 72200 LA FLECHE (FR); CHIRON, Jérôme, 49125 TIERCE (FR)

(57) **Abrégé**

La présente invention concerne un module lumineux pour véhicule automobile comprenant :
- un guide de lumière (10) composé d'une face d'entrée (11) et d'au moins deux branches (12, 13) s'étendant chacune depuis la face d'entrée selon une longueur propre (L, L') et une section propre ;
- au moins une source lumineuse disposée au niveau de la face d'entrée (11) du guide de lumière (10), ladite face d'entrée (11) étant adaptée pour coupler les rayons lumineux émis par ladite source lumineuse dans le guide de lumière (10) ;

dans lequel les deux branches (12, 13) sont jointives sur une partie (D) de leur longueur à partir de la face d'entrée (11) jusqu'à un point de séparation déterminé (15), les deux sections desdites branches (12, 13) se recouvrant sur une zone d'intersection qui est présente de la face d'entrée (11) jusqu'au point de séparation déterminé (15) et les deux sections étant sensiblement constantes le long des branches depuis la face d'entrée (11) sur une longueur supérieure ou égale à la longueur des branches entre la face d'entrée (11) et le point de séparation déterminé (15).

## Description

### DOMAINE TECHNIQUE DE L'INVENTION

La présente invention concerne un module lumineux pour véhicule automobile.

Elle trouve une application particulière mais non limitative dans les dispositifs d'éclairage, tels que des projecteurs de véhicule automobile.

### ARRIÈRE-PLAN TECHNOLOGIQUE DE L'INVENTION

Un module lumineux pour véhicule automobile comprend de manière connue de l'homme du métier :
- deux guides de lumière séparés reliés par une nappe à l'entrée des guides, les deux guides s'étendant chacun depuis la nappe selon une longueur propre et une section propre ;
- une pluralité de sources lumineuses disposées au niveau de la nappe. La nappe permet de fixer les deux guides de lumière sur un boîtier d'un projecteur du véhicule automobile.
Les sources lumineuses émettent de la lumière blanche ou de la lumière ambre pour la réalisation respective d'une première fonction photométrique ou d'une deuxième fonction photométrique.

Un inconvénient de cet état de la technique est qu'il existe des pertes photométriques dues à la nappe à l'entrée des guides de lumière. Par ailleurs, il est difficile de répartir de manière uniforme les rayons lumineux dans les deux guides et d'obtenir une couleur uniforme pour réaliser la fonction photométrique désirée.

Dans ce contexte, la présente invention vise à résoudre les inconvénients précédemment mentionnés.

### DESCRIPTION GENERALE DE L'INVENTION

A cette fin l'invention propose un module lumineux pour véhicule automobile comprenant :
- un guide de lumière composé d'une face d'entrée et d'au moins deux branches s'étendant chacune depuis la face d'entrée selon une longueur propre et une section propre ;
- au moins une source lumineuse disposée au niveau de la face d'entrée du guide de lumière, ladite face d'entrée étant adaptée pour coupler les rayons lumineux émis par ladite source lumineuse dans le guide de lumière ;
dans lequel les deux branches sont jointives sur une partie de leur longueur à partir de la face d'entrée jusqu'à un point de séparation déterminé, les deux sections desdites branches se recouvrant sur une zone d'intersection qui est présente de la face d'entrée jusqu'au point de séparation déterminé et les deux sections étant sensiblement constantes le long des branches depuis la face d'entrée sur une longueur supérieure ou égale à la longueur des branches entre la face d'entrée et le point de séparation déterminé.

Ainsi, comme on va le voir en détail ci-après, en supprimant la nappe à l'entrée du guide de lumière, on s'affranchit des pertes photométriques à l'entrée. Par ailleurs, le fait de réaliser un seul guide de lumière avec deux branches jointives de sections sensiblement constantes permet d'obtenir une meilleure répartition des rayons lumineux et de la couleur dans les deux branches.

Selon des modes de réalisation non limitatifs, le module lumineux peut comporter en outre une ou plusieurs caractéristiques supplémentaires parmi les suivantes :
Dans un mode de réalisation non limitatif, les deux sections sont sensiblement constantes sur toute la longueur desdites branches.
Dans un mode de réalisation non limitatif, l'aire de la zone d'intersection diminue de façon continue depuis la face d'entrée jusqu'au point de séparation déterminé.
Dans un mode de réalisation non limitatif, les sections des branches sont tangentes au niveau du point de séparation déterminé.
Dans un mode de réalisation non limitatif, les sections des deux branches ont une forme identique.
Dans un mode de réalisation non limitatif, la section d'une branche est de forme circulaire.
Dans un mode de réalisation non limitatif, la section d'une branche est de forme carrée.
Dans un mode de réalisation non limitatif, la section d'une branche est de forme oblongue.
Dans un mode de réalisation non limitatif, les sections des deux branches ont la même dimension.
Dans un mode de réalisation non limitatif, ledit module lumineux comprend une pluralité de sources lumineuses disposées au niveau de la face d'entrée du guide de lumière.
Dans un mode de réalisation non limitatif, la zone d'intersection des deux sections est dimensionnée en fonction d'au moins l'une des caractéristiques suivantes :
   - la disposition des sources lumineuses au niveau de la face d'entrée du guide de lumière ;
   - la taille de chaque source lumineuse ;
   - le nombre de sources lumineuses.
Dans un mode de réalisation non limitatif, les sources lumineuses occupent une surface qui est inférieure à la surface composée des deux sections des deux branches de sorte que la face d'entrée collecte intégralement les rayons lumineux émis par les sources lumineuses.
Dans un mode de réalisation non limitatif, les sources lumineuses sont disposées sur deux rangées, les sources lumineuses d'une rangée étant disposées tête bêche avec les sources lumineuses de l'autre rangée.
Dans un mode de réalisation non limitatif, les sources lumineuses comportent des premières sources aptes à émettre de la lumière blanche pour la réalisation d'une première fonction photométrique et des deuxièmes sources aptes à émettre de la lumière ambre pour la réalisation d'une deuxième fonction photométrique.
Dans un mode de réalisation non limitatif, les premières sources forment un groupe de sources positionné sensiblement au niveau du centre de la face d'entrée et bordé de part et d'autre par les deuxièmes sources.
Dans un mode de réalisation non limitatif, les premières sources lumineuses sont aptes à émettre de la lumière blanche pour la réalisation d'une troisième fonction photométrique.
Dans un mode de réalisation non limitatif, les sources lumineuses sont montées sur un support commun.
Dans un mode de réalisation non limitatif, ladite au moins une source lumineuse est une puce émettrice semi-conductrice.
Dans une variante de réalisation non limitative, la puce émettrice semi-conductrice est une diode électroluminescente.

Il est également proposé un dispositif d'éclairage pour véhicule automobile comprenant un module lumineux selon l'une quelconque des caractéristiques précédentes, dans lequel le module lumineux comprend en outre une carte à circuit imprimé, et dans lequel le dispositif d'éclairage comprend en outre un boîtier comprenant une face avant sur laquelle est disposé le guide de lumière et une face arrière sur laquelle est disposée ladite carte à circuit imprimé, ladite face arrière comportant :
- des pattes de centrage pour centrer le guide de lumière dans le boîtier ; et
- des nervures de centrage pour centrer ladite carte à circuit imprimé dans le boîtier.
Dans un mode de réalisation non limitatif, la face arrière comprend en outre deux clips de fixation pour bloquer le guide de lumière dans le boîtier et le guide de lumière comprend deux ergots qui coopèrent avec les deux clips de fixation.
Dans un mode de réalisation non limitatif, le dispositif d'éclairage comprend en outre un radiateur disposé du côté de la face arrière dudit boîtier, la carte à circuit imprimé étant placée entre ladite face arrière et ledit radiateur.

### BREVE DESCRIPTION DES FIGURES

L'invention et ses différentes applications seront mieux comprises à la lecture de la description qui suit et à l'examen des figures qui l'accompagnent.
- la figure 1 représente un module lumineux pour véhicule automobile selon un mode de réalisation non limitatif de l'invention, ledit module lumineux comprenant un guide de lumière composé de deux branches ;
- la figure 2 représente une partie du guide de lumière de la figure 1 et ses deux branches selon un mode de réalisation non limitatif ;
- la figure 3 est un schéma d'un premier mode de réalisation non limitatif des sections des branches du guide de lumière de la figure 1, lesdites sections se recouvrant selon une zone d'intersection ;
- la figure 4 est un schéma d'un deuxième mode de réalisation non limitatif des sections des branches du guide de lumière de la figure 1, lesdites sections se recouvrant selon une zone d'intersection ;
- la figure 5 est une vue en perspective de la face d'entrée du guide de lumière de la figure 2 ;
- la figure 6 est une vue en perspective de sources lumineuses du module lumineux de la figure 1 agencées selon un mode de réalisation non limitatif ;
- la figure 7 illustre un premier schéma des sections des branches du guide de lumière de la figure 5 au niveau de la face d'entrée et des sources lumineuses de la figure 6 disposées au niveau de ladite face d'entrée ;
- la figure 8 illustre un deuxième schéma des sections des branches du guide de lumière au niveau de la face d'entrée et des sources lumineuses de la figure 6 disposées au niveau de ladite face d'entrée ;
- la figure 9 illustre un troisième schéma des sections des branches du guide de lumière au niveau de la face d'entrée et des sources lumineuses de la figure 6 disposées au niveau de ladite face d'entrée ;
- la figure 10 est une vue d'une face arrière d'un boîtier d'un dispositif d'éclairage du véhicule automobile, boîtier dans lequel viennent se positionner le guide de lumière de la figure 2 et une carte à circuit imprimé ;
- la figure 11 représente une partie du guide de lumière de la figure 2 et ses deux branches, ledit guide de lumière comprenant deux ergots de fixation selon un mode de réalisation non limitatif ;
- la figure 12 est une première vue en coupe du boîtier de la figure 10 ;
- la figure 13 est une deuxième vue en coupe du boîtier de la figure 10 ; et
- la figure 14 est une vue d'une face avant du boîtier de la figure 10.

### DESCRIPTION DE MODES DE REALISATION DE L'INVENTION

Les éléments identiques, par structure ou par fonction, apparaissant sur différentes figures conservent, sauf précision contraire, les mêmes références.

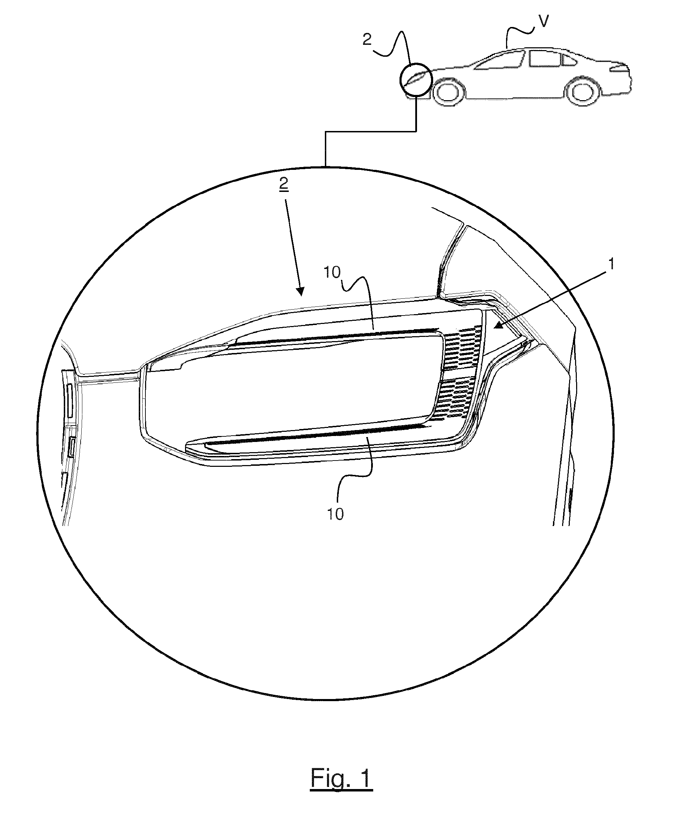

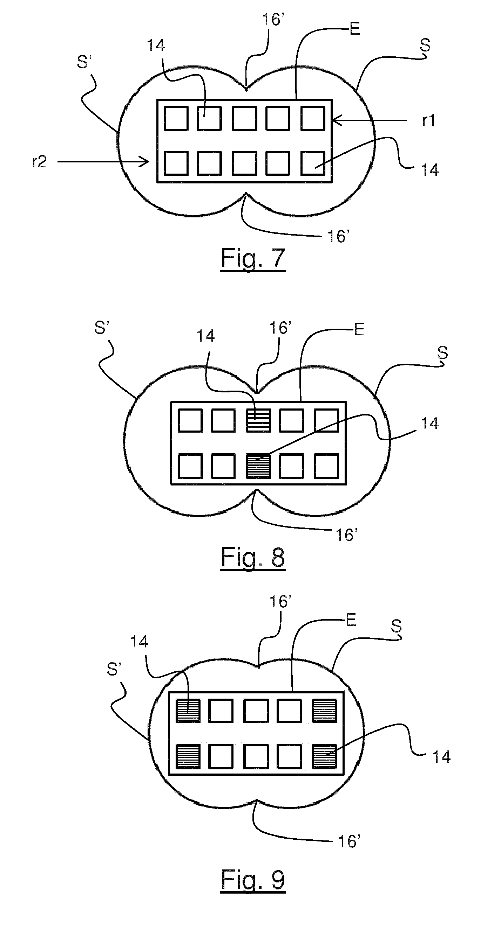

Le module lumineux 1 pour véhicule automobile V selon l'invention est illustré sur la figure 1. Par véhicule automobile, on entend tout type de véhicule motorisé.
Dans l'exemple non limitatif de la figure 1, un projecteur 2 du véhicule V comprend le module lumineux 1 et un écran de protection en plastique.
Le module lumineux 1 comprend un guide de lumière 10 composé de deux branches qui se répartissent sur une partie du pourtour du périmètre du projecteur 2.

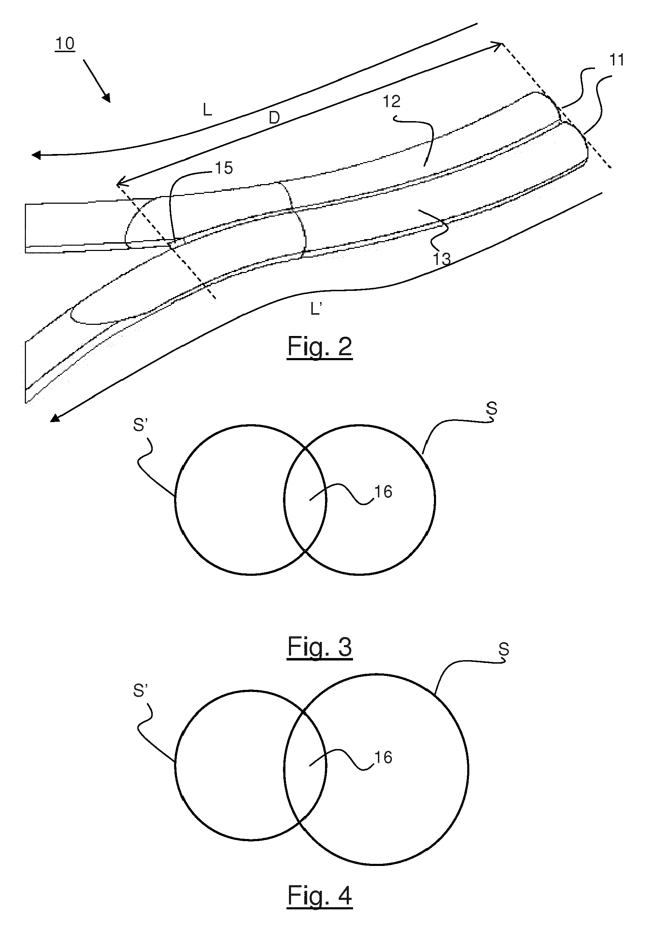

La figure 2 illustre une partie du guide de lumière 10 selon un mode de réalisation non limitatif.
Le guide de lumière 10 est composé d'une face d'entrée 11, de deux branches 12, 13 qui s'étendent chacune depuis la face d'entrée 11 selon une longueur propre L, L' et selon une section propre S, S'.
Dans un mode de réalisation non limitatif, les branches 12 et 13 sont réalisées dans une matière à base de polymères thermoplastiques pmma (poly-méthacrylate de méthyle) ou pc (polycarbonate).
Comme on peut le voir sur la figure 2, les deux branches 12, 13 sont jointives sur une partie D de leur longueur à partir de la face d'entrée 11 jusqu'à un point de séparation déterminé 15. Les deux sections S, S' (illustrées sur la figure 3 ou la figure 4) des deux branches 12, 13 sont sensiblement constantes le long des branches depuis la face d'entrée 11 sur une longueur supérieure ou égale à la longueur des branches entre la face d'entrée 11 et le point de séparation déterminé 15.
Cela permet d'obtenir un point de séparation déterminé 15 le plus petit possible. Ainsi, on évite d'avoir un spot de lumière à cet endroit et donc on évite des fuites de lumières.
Le module lumineux 1 comprend au moins une source lumineuse 14 disposée au niveau de la face d'entrée 11 du guide de lumière 10, Dans un mode de réalisation non limitatif, le module lumineux 1 comprend une pluralité de sources lumineuses 14 disposées au niveau de la face d'entrée 11 du guide de lumière 10. Ce mode de réalisation est pris comme exemple non limitatif dans la suite de la description.
La longueur de la partie D est définie pour :
- permettre le mélange des rayons lumineux émis par les sources lumineuses 14. La longueur ne doit donc pas être trop petite ;
- permettre une bonne tenue mécanique du guide de lumière 10. La longueur ne doit donc pas être trop petite pour que le guide ne se casse pas ;
- faciliter la fabrication du guide de lumière 10, notamment l'étape d'injection de matière.
Dans un exemple non limitatif, la longueur de la partie D est supérieure ou égale à 30mm.
Dans un mode de réalisation non limitatif, les deux sections S, S' sont sensiblement constantes sur toute la longueur L, L' desdites branches 12, 13. Ainsi, le fait qu'une section S, S' soit égale à l'entrée du guide de lumière et à la sortie permet de minimiser les pertes de flux de lumière. En effet, si la section diminue lors du parcours des rayons lumineux dans le guide de lumière, cela engendre des pertes photométriques.
La figure 3 illustre de façon schématique, les deux sections S et S' des deux branches 12 et 13. Comme on peut le voir, les deux sections S, S' desdites branches 12, 13 se recouvrent sur une zone d'intersection 16 qui est présente de la face d'entrée 11 jusqu'au point de séparation déterminé 15. L'aire de la zone d'intersection 16 diminue de façon continue depuis la face d'entrée jusqu'au point de séparation déterminé 15. Au niveau du point de séparation déterminé 15, les deux sections S, S' sont tangentes.
Dans un premier mode de réalisation non limitatif, la section d'une branche est de forme circulaire tel qu'illustré sur la figure 3 ou sur la figure 4.
Dans un deuxième mode de réalisation non limitatif, la section d'une branche est de forme carrée (non illustrée).
Dans un troisième mode de réalisation non limitatif, la section d'une branche est de forme oblongue (non illustrée).
Dans un premier mode de réalisation non limitatif, les sections S, S' des deux branches 12, 13 ont une forme identique et ont la même dimension. Tel qu'illustré sur la figure 3, les sections S, S' sont de forme circulaire et présentent la même dimension. Les cercles des sections ont ainsi le même rayon et la même aire.
Dans un deuxième mode de réalisation non limitatif, les sections S, S' des deux branches 12, 13 ont une forme identique, mais n'ont pas la même dimension. Tel qu'illustré sur la figure 4, les sections S, S' sont de forme circulaire mais présentent des dimensions différentes, l'aire de la section S étant plu grande que l'aire de la section S'.
Dans un troisième mode de réalisation non limitatif (non illustré), les sections S, S' des deux branches 12, 13 sont de forme différentes et ont des dimensions différentes.
Lorsque les deux sections S et S' sont de forme identique, cela facilite la réalisation du guide de lumière 10, notamment pour l'étape d'injection de matière. En particulier, une forme circulaire est simple à réaliser.
Ainsi, lorsque les deux sections S et S' ont la même dimension, cela permet d'obtenir une iso-répartition des rayons lumineux et des couleurs dans les deux branches 12 et 13 du guide de lumière 10.
Lorsque les deux sections S et S' ont une forme identique et ont la même dimension, cela permet d'obtenir un flux total en sortie du guide de lumière qui est optimum.
On notera que la forme circulaire est une forme qui permet une meilleure propagation des rayons lumineux dans les deux branches que les autres formes.

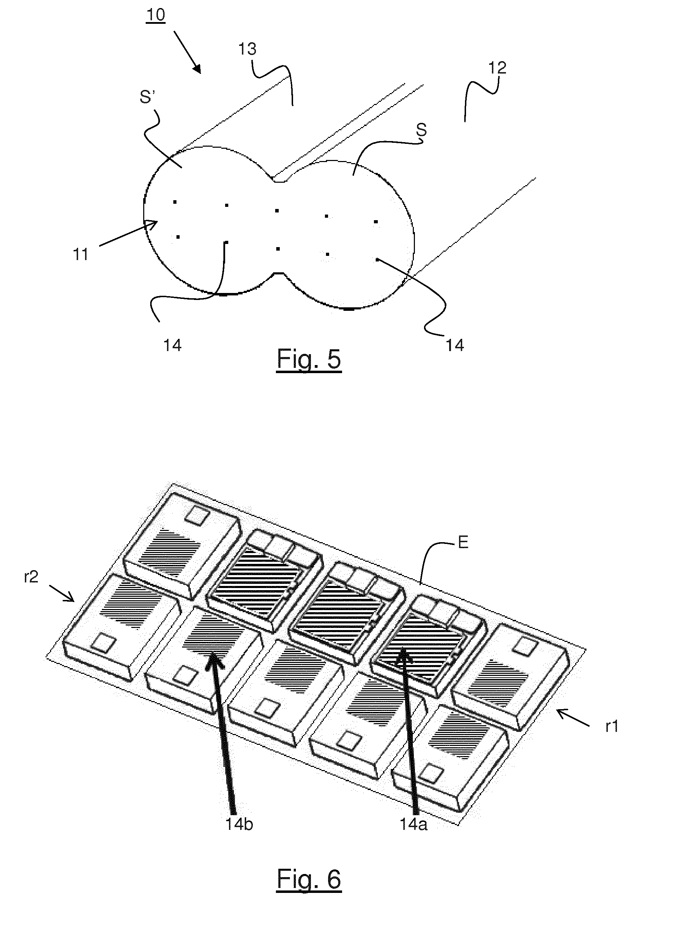

La figure 5 est une vue agrandie de la face d'entrée 11 du guide de lumière 10.
Comme on peut le voir, la face d'entrée 11 est plane et est composée de l'aire globale des sections S et S' des deux branches 12 et 13.
Une pluralité de sources lumineuses 14 est disposée au niveau de la face d'entrée 11 du guide de lumière 10, ladite face d'entrée 11 étant adaptée pour coupler les rayons lumineux émis par lesdites sources lumineuses 14 dans le guide de lumière 10. Les rayons lumineux rentrent dans le guide de lumière 10 par la face d'entrée 11 et se propagent dans le guide de lumière par réflexion interne totale sur les parois des deux branches 12 et 13. On notera qu'il existe une distance de quelques millimètres entre les sources lumineuses 14 et la face d'entrée 11. Dans un exemple non limitatif, la distance est sensiblement égale à 0,3mm. Cette distance permet aux sources lumineuses 14 de ne pas subir les vibrations du véhicule automobile V, vibrations subies par le projecteur 2 du véhicule tout en assurant qu'une majorité de la lumière émise par les sources lumineuses 14 rentre dans le guide. Les sources lumineuses 14 ne risquent ainsi pas de se casser.
On notera que le guide de lumière 10 comprend en outre des éléments de découplage (non illustrés) qui permettent de faire sortir lesdits rayons lumineux sur des faces de sortie (non illustrées) du guide de lumière 10. Dans un exemple non limitatif, les éléments de découplage sont des prismes.
Dans un mode de réalisation non limitatif, les sources lumineuses 14 sont des puces émettrices semi-conductrices. Dans une variante non limitative, les puces sont des diodes électroluminescentes. Par diode électroluminescente, on entend tout type de diodes électroluminescentes, que ce soit dans des exemples non limitatifs des LED (« Light Emitting Diode »), des OLED (« organic LED »), des AMOLED (Active-Matrix-Organic LED), ou encore des FOLED (Flexible OLED).
La figure 6 illustre un agencement des sources lumineuses 14 selon un mode de réalisation non limitatif. On peut remarquer que les sources lumineuses 14 comportent chacune un boîtier de forme rectangulaire. Dans un exemple non limitatif, les sources lumineuses ont une taille de 1mm*1mm et leur boîtier une taille de 2mm*2mm.
Selon ce mode, les sources lumineuses 14 sont disposées sur deux rangées r1, r2, les sources lumineuses 14 d'une rangée r1 étant disposées tête bêche avec les sources lumineuses 14 de l'autre rangée r2. On obtient ainsi un agencement compact des sources lumineuses 14.
Cet agencement permet en outre de rapprocher le plus possible les zones émettrices des sources lumineuses 14 les unes des autres et de concentrer ainsi les rayons lumineux émis le plus vers le centre du guide de lumière 10. En effet, les zone émettrices des sources lumineuses 14 ne sont pas centrées sur le centre du boîtier mais sont légèrement décalées par rapport audit centre.
On notera qu'un agencement des sources lumineuses 14 en cercle prendrait trop de place par rapport aux sections S, S' du guide de lumière 10.
Les sources lumineuses 14 sont disposées sur un support commun (non illustré). Dans un premier exemple non limitatif, le support commun est une carte à circuit imprimé PCB (« Printed Circuit Board» en anglais). Dans un deuxième exemple non limitatif, le support commun est un radiateur.
Dans un premier mode de réalisation non limitatif, les sources lumineuses 14 comportent des premières sources 14a (hachures larges) adaptées pour émettre de la lumière blanche pour la réalisation d'une première fonction photométrique et des deuxièmes sources 14b (hachures fines) adaptées pour émettre de la lumière ambre pour la réalisation d'une deuxième fonction photométrique. Dans un exemple non limitatif, la première fonction photométrique est une fonction DRL pour réaliser un feu diurne et la deuxième fonction photométrique est une fonction ID pour réaliser un indicateur de direction. Dans l'exemple illustré, il y a ainsi trois sources lumineuses blanches 14a et sept sources lumineuses ambrées 14b.
Dans la variante de réalisation non limitative illustrée, les premières sources 14a forment un groupe de sources positionné sensiblement au niveau du centre de la face d'entrée 11 et bordé de part et d'autre par les deuxièmes sources 14b. Cela permet de favoriser le flux lumineux des sources lumineuses blanches, puisque la lumière issue des sources lumineuses centrales 14a est mieux collectée par le guide de lumière 10. Par conséquent, les sources lumineuses centrales 14a permettent de réaliser une première fonction photométrique présentant une intensité lumineuse supérieure à celle de la deuxième fonction réalisée par les sources lumineuses extérieures 14b, à savoir les sources lumineuses ambrées.
Dans un second mode de réalisation non limitatif, les premières sources lumineuses 14a sont adaptées pour émettre de la lumière blanche pour la réalisation d'une troisième fonction photométrique. Dans un exemple non limitatif, la troisième fonction peut être une fonction PL qui réalise un feu de position. Par exemple, en sous-alimentant électriquement ces premières sources 14a en comparaison à l'alimentation nécessaire à la réalisation de la première fonction photométrique, on réalise la fonction PL.
On notera que tel qu'illustré sur la figure 6, les sources lumineuses 14 occupent une surface E qui est inférieure à la surface composée des deux sections S, S' des deux branches 12, 13 de sorte que la face d'entrée 11 collecte une majorité des rayons lumineux émis par les sources lumineuses 14. Ainsi, l'aire de la face d'entrée 11 et par conséquent la zone d'intersection 16 des deux sections S, S' sont dimensionnées en fonction d'au moins l'une, voire de toutes, des caractéristiques suivantes :
- la disposition des sources lumineuses 14 au niveau de la face d'entrée 11 du guide de lumière 10 ;
- la taille de chaque source lumineuse 14 ;
- le nombre de sources lumineuses 14.
Dans le cas où la zone d'intersection 16 est trop petite tel qu'illustré sur la figure 8, elle comporte deux points de pincement 16' entre les deux branches 12 et 13 très marqués. Au niveau de ces points de pincement, les rayons lumineux des deux sources lumineuses 14 qui sont hachurées sur la figure ne seront pas correctement collectés par le guide de lumière, une partie des rayons lumineux sera en effet non collectée car ces deux sources lumineuses 14 sont trop proches des points de pincement 16'.
Dans le cas où la zone d'intersection 16 est trop grande tel qu'illustré sur la figure 9, elle comporte deux points de pincement 16' entre les deux branches 12 et 13 très peu marqués. Au niveau de ces points de pincement, les rayons lumineux des deux sources lumineuses 14 sont correctement collectés par le guide de lumière. Par contre les rayons lumineux des quatre sources lumineuses 14 qui sont hachurées sur la figure et qui sont situées aux deux extrémités des deux sections S et S' ne seront pas correctement collectés par le guide de lumière. Une partie des rayons lumineux sera en effet non collectée, car ces quatre sources lumineuses 14 sont trop proches des bords des branches 12 et 13.
Ainsi, en fonction des caractéristiques citées précédemment, le bon compromis pour coupler au mieux les rayons lumineux de l'ensemble des sources lumineuses 14 est la taille de la zone d'intersection 16 illustrée à la figure 7.

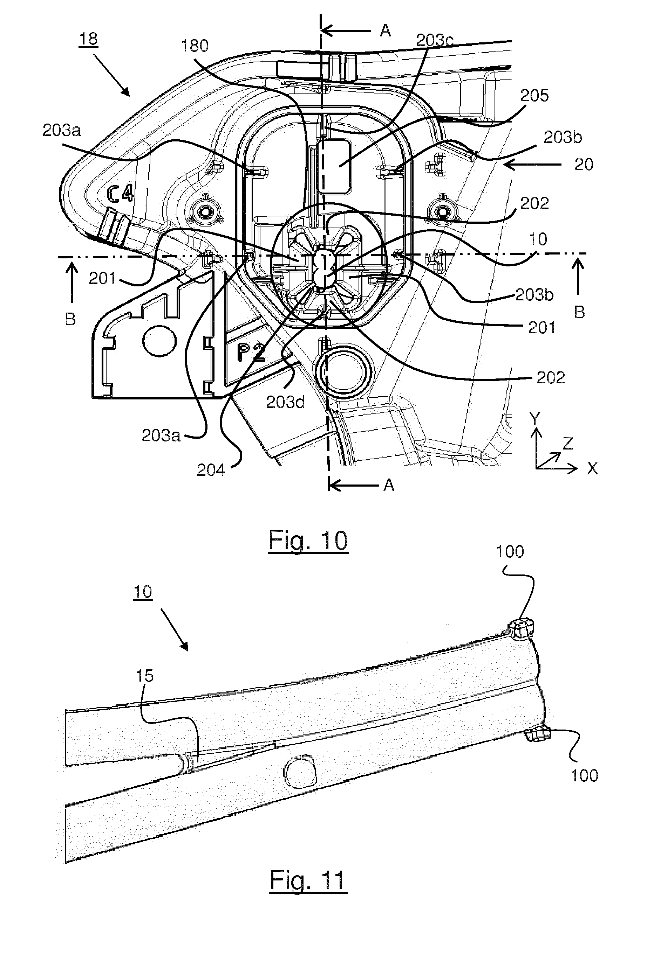

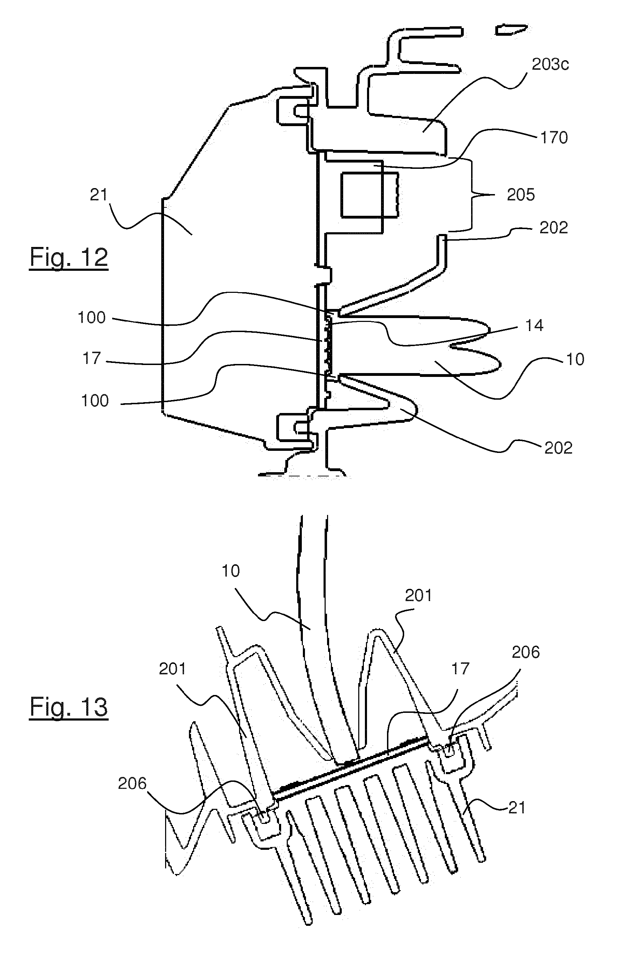

En référence aux figures 10 à 15, l'invention a également pour objet un dispositif d'éclairage 2 pour véhicule automobile V comprenant un module lumineux 1, ledit module lumineux 1 comprenant :
- un guide de lumière 10 composé d'une face d'entrée 11 et d'au moins deux branches 12, 13 s'étendant chacune depuis la face d'entrée 11 selon une longueur propre L, L' et une section propre S, S' ;
- une pluralité de sources lumineuses 14 disposées au niveau de la face d'entrée 11 du guide de lumière 10, ladite face d'entrée étant adaptée pour coupler les rayons lumineux émis par lesdites sources lumineuses 14 dans le guide de lumière 10,
dans lequel le module lumineux 1 comprend en outre une carte à circuit imprimé 17, et dans lequel le dispositif d'éclairage 2 comprend en outre un boîtier 18 comprenant une face avant 19 sur laquelle est disposé le guide de lumière 10 et une face arrière 20 sur laquelle est disposée ladite carte à circuit imprimé, ladite face arrière 20 comportant :
- des pattes de centrage 201 pour centrer le guide de lumière 10 dans le boîtier ; et
- des nervures de centrage 203 pour centrer ladite carte à circuit imprimé dans le boîtier 18.
Dans un mode de réalisation non limitatif, le module lumineux 1 est un module lumineux selon l'invention qui a été décrit précédemment. Ainsi, les deux branches 12, 13 sont jointives sur une partie D de leur longueur à partir de la face d'entrée 11 jusqu'à un point de séparation déterminé 15, les deux sections S, S' desdites branches 12, 13 se recouvrant sur une zone d'intersection 16 qui est présente de la face d'entrée 11 jusqu'au point de séparation déterminé 15 et les deux sections S, S' étant sensiblement constantes le long des branches depuis la face d'entrée 11 sur une longueur supérieure ou égale à la longueur des branches entre la face d'entrée 11 et le point de séparation déterminé 15.
Dans un exemple non limitatif, le dispositif d'éclairage 2 est un projecteur.
Sur la figure 10 est représentée la face arrière 20 du boîtier 18 du dispositif d'éclairage 2. Le boîtier 18 comprend une forme conique 180 qui accueille le guide de lumière 10 et qui permet de localiser ledit guide en Y et Z dans le boîtier. La forme conique 180 comporte un orifice 204 pour recevoir le guide de lumière 10. Deux pattes de centrage 201 sont adaptées pour centrer le guide de lumière 10 dans le boîtier 18 selon l'axe des ordonnées Y. Les deux pattes de centrage 201 sont positionnées en regard l'une de l'autre. Elles se situent à l'extrémité de la forme conique 180. Elles permettent de centrer les deux branches 12 et 13 du guide en même temps, une patte s'étendant sur la longueur de la face d'entrée 11.
Par ailleurs, six nervures de centrage 203 sont adaptées pour centrer la carte à circuit imprimé directement sur le boîtier 18 selon les directions X, Y et Z. Les six nervures sont positionnées sur la bordure du boîtier 18. Selon l'agencement illustré dans l'exemple non limitatif, deux nervures 203a sont positionnées en regard de deux autres nervures 203b, et une nervure 203c est positionnée en regard d'une autre nervure 203d. Cela permet de bien maintenir la carte à circuit imprimé 17 en position.
La face arrière 20 comprend également une ouverture 205 en regard de laquelle vient se positionner un connecteur 170 de la carte à circuit imprimé 17 (illustré sur la figure 12).
Dans un mode de réalisation non limitatif, la face arrière 20 comprend en outre deux clips de fixation 202 pour bloquer le guide de lumière 10 dans le boîtier 18 et le guide de lumière 10 comprend deux ergots 100 qui coopèrent avec les deux clips de fixation 202. Les deux clips de fixation se situent à l'extrémité de la forme conique 180. Ils sont en regard l'un de l'autre et sont flexibles. Ils permettent le passage des deux ergots 100 du guide de lumière 100.
Les deux ergots du guide de lumière 10 sont représentés sur la figure 11. Ils sont situés à l'extrémité du guide de lumière 10 de part et d'autre de la face d'entrée 11, chacun à l'extrémité d'une branche 12 et 13. La taille de ces ergots est minimisée au maximum pour limiter les fuites de lumière et la perte de flux.
La figure 12 illustre une vue selon une coupe A-A verticale du boîtier 18 sur lequel sont disposés le guide de lumière 10 et la carte à circuit imprimé 17. Dans l'exemple non limitatif illustré, la carte à circuit imprimé 17 sert de support aux sources lumineuses 14.
Comme on peut le voir, le guide de lumière 10 est disposé d'un côté du boîtier, tandis que la carte 17 est disposée de l'autre côté. Les deux ergots 100 du guide de lumière 10 viennent s'insérer dans les deux clips de fixation 202. Le guide de lumière 10 est ainsi fixé au boîtier 18. Les deux ergots 100 sont bloqués entre le boîtier et la carte à circuit imprimé 17 et sont situés de part et d'autre des sources lumineuses 14 de ladite carte 17. Ils assurent ainsi la position et la fixation de la face d'entrée 11 du guide de lumière 10 à une distance déterminée des sources lumineuses 14 de la carte à circuit imprimé 17. Dans un exemple non limitatif, les deux ergots 100 sont configurés de sorte que la distance entre la face d'entrée 11 et les sources lumineuses 14 est égale à 0,3mm.
On notera que le fait que le guide 10 de lumière soit en contact avec la carte à circuit imprimé 17 au moyen des ergots 100 permet d'assurer une focalisation correcte des rayons lumineux des sources lumineuses 14 dans le guide de lumière 10.
Comme on peut le voir également sur la figure 12, le dispositif d'éclairage 2 comprend en outre un radiateur 21 disposé du côté de la face arrière 20 dudit boîtier 18, la carte à circuit imprimé 17 étant placée entre ladite face arrière 20 et ledit radiateur 21. Le radiateur 21 permet d'évacuer la chaleur dégagée par les sources lumineuses 14 et permet ainsi d'optimiser leur performance. Il est extérieur au boîtier.
On notera que le guide de lumière 10 est assemblé en premier sur le boîtier. Le radiateur 21 est quant à lui assemblé sur la carte à circuit imprimé. Puis, l'ensemble carte à circuit imprimé 17-radiateur 21 est vissé sur le boîtier 18. Sur la figure 12, on peut également voir le connecteur 170 de la carte à circuit imprimé 17. L'ouverture 205 réalisée dans le boîtier 18 permet au connecteur 170 d'être relié à une unité de commande et d'alimentation des sources lumineuses 14 (non illustrée).
La figure 13 illustre une vue selon une coupe B-B horizontale du boîtier 18. Les deux pattes de centrage 201 ainsi que deux pattes 206 du boîtier sont illustrées. Les deux pattes 206 sont encastrées dans un joint du boîtier 18 et le radiateur 21 vient reposer sur lesdites pattes. Cela permet de résoudre des problèmes d'étanchéité du boîtier 18.

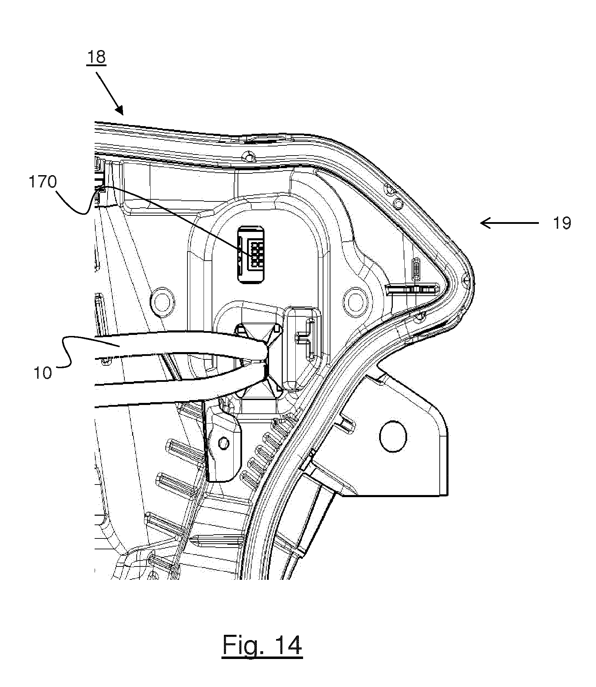

Sur la figure 14 est représentée la face avant 19 du boîtier 18 du dispositif d'éclairage 2. Comme on peut le voir, la face d'entrée 11 du guide de lumière est positionnée dans l'orifice 204 du boîtier 18 prévu à cet effet et le connecteur 170 se trouve en regard de l'ouverture 205 du boîtier 18.
Ainsi, en utilisant le boîtier 18, on évite d'utiliser une nappe à l'entrée pour relier deux guides de lumière. On s'affranchit des problèmes de perte de flux à l'entrée des guides de lumière (ici les deux branches 12 et 13), et par ailleurs, il n'y a pas de problème d'injection comme c'est le cas avec une nappe. En effet, une nappe est difficile à réaliser car elle est de très faible épaisseur par rapport aux guides de lumière associés.

Bien entendu la description de l'invention n'est pas limitée aux modes de réalisation décrits ci-dessus.
Ainsi, dans un mode de réalisation non limitatif, les sections S, S' ne sont pas constantes sur toute la longueur L, L' des branches 12, 13. Par exemple, après le point de séparation 15, chaque section S, S' diminue ou augmente de la même manière ou non.

Ainsi, l'invention décrite présente notamment les avantages suivants :
- les deux branches 12 et 13 jointives permettent de réaliser deux guides de lumière solidaires en une seule pièce : on obtient ainsi un double guide de lumière ;
- les deux branches 12 et 13 du guide de lumière permettent de répartir le flux lumineux sur le pourtour du périmètre du projecteur en fonction de la demande du client ;
- le flux lumineux augmente de manière conséquente par rapport à une solution avec deux guides séparés (avec ou sans nappe) et par rapport à une solution où la section change de forme (par exemple une forme oblongue à l'entrée du guide puis une section circulaire après le point de séparation) ;
- la section constante des branches permet d'avoir un point de séparation réduit et en conséquence de réduire de façon conséquente les fuites de lumière à cet endroit. L'aspect allumé du guide de lumière est ainsi amélioré. Un observateur du projecteur ne voit donc plus de fuites de lumière au niveau du point de séparation contrairement à une solution où la section change de forme (par exemple une forme oblongue à l'entrée du guide puis une section circulaire après le point de séparation) et où le point de séparation comporte beaucoup de matière injectée ;
- une unique carte à circuit imprimé permet de regrouper l'ensemble des sources lumineuses au niveau de la face d'entrée du guide de lumière : la répartition du flux lumineux est ainsi homogène ainsi que le mélange des couleurs, contrairement à une solution avec deux guides séparés qui nécessite de séparer les sources lumineuses ;
- la face d'entrée du guide est conçue en gardant le contour des deux branches de sorte à minimiser les pertes photométriques à l'entrée et les fuites de lumière à la séparation des branches et assurer un bon mélange des couleurs et une répartition identique de flux dans chaque branche, contrairement à une solution où un guide de lumière comporte deux branches de forme circulaire après le point de séparation et une unique branche de forme oblongue avant le point de séparation. Dans cette solution de l'art antérieur, l'aire de la section est importante à l'entrée du guide pour pouvoir placer les sources lumineuses puis l'aire de la section diminue ce qui entraîne des pertes de flux lumineux ;
- un nombre flexible de sources lumineuses peut être utilisé contrairement à une solution avec deux guides séparés (avec ou sans nappe) qui ne peuvent utiliser qu'un nombre pair de sources lumineuses. Cela apporte ainsi une entière flexibilité au niveau du flux lumineux désiré et de l'intensité de lumière que l'on veut obtenir ;
- un seul outil est utilisé pour réaliser l'injection de matière pour obtenir le guide de lumière selon l'invention, contrairement à une solution avec deux guides séparés (avec ou sans nappe) qui nécessite deux outils différents pour l'injection de matière ;
- l'injection de matière est facilitée car il n'y a plus de nappe à l'extrémité du guide de lumière. On a un meilleur remplissage du guide de lumière lors de l'injection ;
- comme le guide de lumière est une pièce de forme homogène et dont l'épaisseur n'est pas petite, il y a moins de risque plasturgique tel qu'une retassure. On rappelle que la retassure est une déformation de la pièce après moulage, en particulier la pièce se rétracte.
- il n'y a plus de problème lors de l'injection de matière contrairement à une solution avec deux guides de lumière qui se rejoignent à l'entrée du guide avec une forme oblongue et se séparent avec une forme circulaire, cette dernière solution nécessitant une injection importante de matière au niveau du point de séparation ; et
- l'assemblage du guide de lumière dans le boîtier est simple et facile.

## Revendications

1. Module lumineux (1) pour véhicule automobile (V) comprenant :
- un guide de lumière (10) composé d'une face d'entrée (11) et d'au moins deux branches (12, 13) s'étendant chacune depuis la face d'entrée selon une longueur propre (L, L') et une section propre (S, S') ;
- au moins une source lumineuse (14) disposée au niveau de la face d'entrée (11) du guide de lumière (10), ladite face d'entrée (11) étant adaptée pour coupler les rayons lumineux émis par ladite source lumineuse (14) dans le guide de lumière (10) ;
dans lequel les deux branches (12, 13) sont jointives sur une partie (D) de leur longueur à partir de la face d'entrée (11) jusqu'à un point de séparation déterminé (15), les deux sections (S, S') desdites branches (12, 13) se recouvrant sur une zone d'intersection (16) qui est présente de la face d'entrée (11) jusqu'au point de séparation déterminé (15) et les deux sections (S, S') étant sensiblement constantes le long des branches depuis la face d'entrée (11) sur une longueur supérieure ou égale à la longueur des branches entre la face d'entrée (11) et le point de séparation déterminé (15).

2. Module lumineux (1) selon la revendication 1, dans lequel les deux sections (S, S') sont sensiblement constantes sur toute la longueur (L, L') desdites branches (12, 13).

3. Module lumineux (1) selon la revendication 1 ou la revendication 2, dans lequel l'aire de la zone d'intersection (16) diminue de façon continue depuis la face d'entrée (11) jusqu'au point de séparation déterminé (15).

4. Module lumineux selon l'une quelconque des revendications précédentes 1 à 3, dans lequel les sections (S, S') des branches (12, 13) sont tangentes au niveau du point de séparation déterminé (15).

5. Module lumineux (1) selon l'une quelconque des revendications précédentes 1 à 4, dans lequel les sections (S, S') des deux branches (12, 13) ont une forme identique.

6. Module lumineux (1) selon l'une quelconque des revendications précédentes 1 à 5, dans lequel les sections (S, S') des deux branches (12, 13) ont la même dimension.

7. Module lumineux (1) selon l'une quelconque des revendications précédentes 1 à 6, dans lequel ledit module lumineux (1) comprend une pluralité de sources lumineuses (14) disposées au niveau de la face d'entrée (11) du guide de lumière (10).

8. Module lumineux (1) selon la revendication 7, dans lequel la zone d'intersection (16) des deux sections (S, S') est dimensionnée en fonction d'au moins l'une des caractéristiques suivantes :
- la disposition des sources lumineuses (14) au niveau de la face d'entrée (11) du guide de lumière (10) ;
- la taille de chaque source lumineuse (14) ;
- le nombre de sources lumineuses (14).

9. Module lumineux (1) selon la revendication 7 ou la revendication 8, dans lequel les sources lumineuses (14) occupent une surface (E) qui est inférieure à la surface composée des deux sections (S, S') des deux branches (12, 13) de sorte que la face d'entrée (11) collecte intégralement les rayons lumineux émis par les sources lumineuses (14).

10. Module lumineux (1) selon l'une quelconque des revendications précédentes 7 à 9, dans lequel les sources lumineuses (14) sont disposées sur deux rangées (r1, r2), les sources lumineuses (14) d'une rangée (r1) étant disposées tête bêche avec les sources lumineuses (14) de l'autre rangée (r2).

11. Module lumineux (1) selon l'une quelconque des revendications 7 à 10, dans lequel les sources lumineuses (14) comportent des premières sources (14a) aptes à émettre de la lumière blanche pour la réalisation d'une première fonction photométrique et des deuxièmes sources (14b) aptes à émettre de la lumière ambre pour la réalisation d'une deuxième fonction photométrique.

12. Module lumineux (1) selon la revendication 11, dans lequel les premières sources (14a) forment un groupe de sources positionné sensiblement au niveau du centre de la face d'entrée (11) et bordé de part et d'autre par les deuxièmes sources (14b).

13. Dispositif d'éclairage (2) pour véhicule automobile (V) comprenant un module lumineux (1) selon l'une quelconque des revendications précédentes 1 à 12, dans lequel le module lumineux (1) comprend en outre une carte à circuit imprimé (17), et dans lequel le dispositif d'éclairage (2) comprend en outre un boîtier (18) comprenant une face avant (19) sur laquelle est disposé le guide de lumière (10) et une face arrière (20) sur laquelle est disposée ladite carte à circuit imprimé (17), ladite face arrière (20) comportant :
- des pattes de centrage (201) pour centrer le guide de lumière (10) dans le boîtier (18) ; et
- des nervures de centrage (203) pour centrer ladite carte à circuit imprimé (17) dans le boîtier (18).

14. Dispositif d'éclairage (2) selon la revendication 13, dans lequel la face arrière (20) comprend en outre deux clips de fixation (202) pour bloquer le guide de lumière (10) dans le boîtier (18) et le guide de lumière (10) comprend deux ergots (100) qui coopèrent avec les deux clips de fixation (192).

15. Dispositif d'éclairage (2) selon la revendication 13 ou la revendication 14, dans lequel il comprend en outre un radiateur (21) disposé du côté de la face arrière (20) dudit boîtier (18), la carte à circuit imprimé (17) étant placée entre ladite face arrière (20) et ledit radiateur (21).
